# EUROPÄISCHE PATENTSCHRIFT

(11) **EP 1 381 900 B1**
(45) Veröffentlichungstag und Bekanntmachung des Hinweises auf die Patenterteilung: **15.11.2006**
(21) Anmeldenummer: 02726223.7
(22) Anmeldetag: 27.03.2002
(51) Int. Cl.: G02B 21/00, G02B 21/24, G01J 3/44, G01J 3/02, G01N 21/64

(54) **MIKROSKOPANORDNUNG ZUR FLUORESZENZKORRELATIONSSPEKTROSKOPIE**
MICROSCOPE ARRAY FOR FLUORESCENCE CORRELATION SPECTROSCOPY
ENSEMBLE MICROSCOPE POUR LA SPECTROSCOPIE A CORRELATION DE FLUORESCENCE

(30) Priorität: 28.03.2001 DE 10115309
(43) Veröffentlichungstag der Anmeldung: 21.01.2004
(73) Patentinhaber: Gnothis Holding SA, 1015 Ecublens (CH)
(72) Erfinder: RIGLER, Rudolf, CH-1025 St-Sulpice (CH); EDMAN, Lars, S-112 56 Stockholm (SE)
(74) Vertreter: Tiesmeyer, Johannes
(86) Internationale Anmeldenummer: PCT/EP2002/003453
(87) Internationale Veröffentlichungsnummer: WO 2002/077694

(56) Entgegenhaltungen:
- WO-A-96/37797
- DE-A- 19 649 605
- VOLCKER M ET AL: "MIKROSKOPGESTUTZTE FLUORESZENZ-PHOTONEN-KORRELATION" TECHNISCHES MESSEN TM, R.OLDENBOURG VERLAG. MUNCHEN, DE, Bd. 63, Nr. 4, 1. April 1996 (1996-04-01), Seiten 128-135, XP000584186 ISSN: 0171-8096
- SCHWILLE P ET AL: "DUAL-COLOR FLUORESCENCE CROSS-CORRELATION SPECTROSCOPY FOR MULTICOMPONENT DIFFUSIONAL ANALYSIS IN SOLUTION" BIOPHYSICAL JOURNAL, NEW YORK, US, US, Bd. 72, Nr. 4, 1. April 1997 (1997-04-01), Seiten 1878-1886, XP002059917 ISSN: 0006-3495
- M. EIGEN, R. RIGLER: "Sorting single molecules: Application to diagnostics and evolutionary biotechnology" PROC. NATL. ACAD. SCI. USA, Bd. 91, 1994, Seiten 5740-5747, XP002207751 in der Anmeldung erwähnt

## Beschreibung

Die Erfindung betrifft eine Mikroskopanordnung zur Fluoreszenzkorrelationsspektroskopie nach Anspruch 1.

Fluoreszenzspektroskopie ist ein Verfahren, das den Nachweis bestimmter Analyten in einer Messprobe ermöglicht. Bei der Messprobe kann es sich um eine beliebige Flüssigkeitsprobe handeln; in der Regel ist dies eine biologische Probe, z.B. eine Körperflüssigkeit, wie Blut, Serum Plasma, Urin, Speichel etc. oder ein molekularbiologischer Reaktionsansatz, z.B. ein Sequenzierungsansatz. Bei den Analyten kann es sich um niedermolekulare Substanzen, wie Arzneimittel, Hormone, Nukleotide, Metaboliten etc., oder hochmolekulare Substanzen, wie Proteine, Zucker, Nukleinsäuren etc., Viren oder Zellen wie Bakterienzellen handeln. Um die gesuchten Analyten identifizieren zu können, werden sie mit fluorophortragenden Reagenzien markiert, die bei Licht-, insbesondere Laserbestrahlung Fluoreszenzsignale aussenden, welche detektiert und ausgewertet werden. In der Fluoreszenzkorrelationsspektroskopie werden hierbei Auto-oder/und Kreuzkorrelationen der detektierten Fluoreszenzsignale ausgewertet. Nähere Informationen zur Fluoreszenzspektroskopie und insbesondere zur Fluoreszenzkorrelationsspektroskopie können beispielsweise der EP 0 679 251 B1 sowie einem Artikel "Sorting single molecules: Application to diagnostics and evolutionary biotechnology" von M. Eigen und R. Rigler, erschienen in Band 91 von Proc. Natl. Acad. Sci. USA, Seiten 5740 bis 5747, Juni 1994, entnommen werden.

Zu fluoreszenzspektroskopischen Untersuchungen werden Mikroskope verwendet, die wünschenswerterweise auf ein sehr kleines Teilvolumen der Probe - das Messvolumen - fokussierbar sein sollen. Ein sehr kleines Messvolumen, beispielsweise im Femtoliterbereich, wird angestrebt, damit die fluoreszierenden Moleküle nicht durch zu intensive und lange Lichtbestrahlung ausbleichen und die Messungen verfälschen. Bei derart kleinen Messvolumina ist eine exakt konfokale Einstellung des verwendeten Mikroskops von großer Bedeutung, um hinreichend hohe Signal-Rausch-Abstände sicherzustellen. Konfokalität heißt dabei, dass Beleuchtungsfokus und Beobachtungsfokus des Mikroskops exakt zusammenfallen. Dies zu erreichen ist jedoch schwierig, weil eben aufgrund der winzigen Größe des Messvolumens bereits geringste Fehleinstellungen zur Afokalität zwischen Beleuchtungsfokus und Beobachtungsfokus führen können. Die Sache wird noch komplizierter, wenn das Mikroskop mit mehreren Detektoren ausgeführt ist und der Beobachtungsfokus jedes dieser Detektoren exakt mit dem Messvolumen zusammenfallen soll.

Eine Mikroskopanordnung der eingangs genannten Art ist z.B. aus dem Beitrag "Mikroskopgestützte Fluoreszenz-Photonen-Korrelation" der Autoren M. Völcker, A. Schnetz und R. Grub in der Zeitschrift "Technisches Messen", Band 63, Nr. 4, Seiten 128 - 135 (1996) bekannt.

Der Erfindung liegt die Aufgabe zugrunde, eine solche Mikroskopanordnung bereitzustellen, bei der im Vergleich zum Stand der Technik eine noch zuverlässigere Fokaleinstellung von Beobachtungsstrahlengängen und Beleuchtungsstrahlengängen in einem gemeinsamen Messpunkt realisierbar ist.

Zur Lösung dieser Aufgabe wird erfindungsgemäß eine Anordnung gemäß Anspruch 1 vorgeschlagen.

Dabei kann zur Fokaleinstellung eines Beleuchtungsstrahlengangs und eines Beobachtungsstrahlengangs relativ zueinander die Stell-Steuereinrichtung dazu ausgebildet sein, eine Verstellung mindestens eines ausschließlich in dem Beleuchtungsstrahlengang angeordneten optischen Elements oder/und eine Verstellung mindestens eines ausschließlich in dem Beobachtungsstrahlengang angeordneten optischen Elements in Abhängigkeit eines Autokorrelationssignals zu bewirken, welches durch Autokorrelation des Fluoreszenzdetektionssignals des in dem Beobachtungsstrahlengang angeordneten Photodetektors hergeleitet ist. Sollen dagegen ein erster und ein zweiter Beobachtungsstrahlengang relativ zueinander fokal eingestellt werden, so kann die Stell-Steuereinrichtung dazu ausgebildet sein, eine Verstellung mindestens eines in dem ersten Beobachtungsstrahlengang angeordneten optischen Elements oder/und eine Verstellung mindestens eines in dem zweiten Beobachtungsstrahlengang angeordneten optischen Elements in Abhängigkeit eines Kreuzkorrelationssignals zu bewirken, welches durch Kreuzkorrelation der Fluoreszenzdetektionssignale der in den beiden Beobachtungsstrahlengängen angeordneten Photodetektoren hergeleitet ist.

Das optische Element kann beliebiger Art sein, solange seine räumliche Position die Lage des objektseitigen Fokus des betreffenden Strahlengangs beeinflusst, beispielsweise eine Linse, eine Blende oder ein Spiegel. Als verstellbares optisches Element kann im Fall eines Beleuchtungsstrahlengangs auch unmittelbar die Lichtquelle oder im Fall eines Beobachtungsstrahlengangs der die angeregten Lichtimpulse detektierende Photodetektor dienen. In jedem Strahlengang kann nicht nur ein einziges optisches Element verstellbar sein, sondern es können zwei oder mehr optische Elemente vorgesehen sein, die unabhängig voneinander zur Fokaleinstellung des betreffenden Strahlengangs verstellbar sind.

Es hat sich gezeigt, dass unter Heranziehung der Korrelationssignale aus den Fluoreszenzdetektionssignalen eine hochgenaue Fokaleinstellung jedes Strahlenganges der Mikroskopanordnung erzielbar ist.

Nachfolgend werden einige Ausführungsbeispiele der erfindungsgemäßen Mikroskopanordnung anhand der beigefügten Zeichnungen näher erläutert. Darin stellen dar:
- Fig. 1: schematisch ein erstes Ausführungsbeispiel der Mikroskopanordnung,
- Fig. 2: schematisch ein zweites Ausführungsbeispiel der Mikroskopanordnung,
- Fig. 3: schematisch ein drittes Ausführungsbeispiel der Mikroskopanordnung und
- Fig. 4: schematisch ein viertes Ausführungsbeispiel der Mikroskopanordnung.

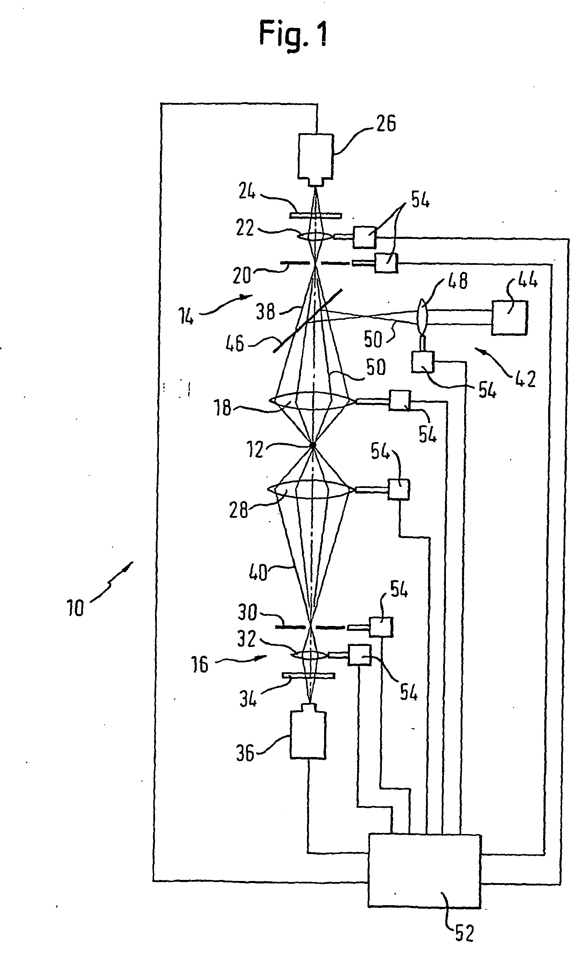

Die in Fig. 1 gezeigte Mikroskopanordnung ist als Doppelmikroskop 10 ausgeführt, welches zur fluoreszenzspektroskopischen Untersuchung einer bei 12 angeordneten, jedoch im Detail nicht näher dargestellten Messprobe, beispielsweise einer Blutprobe, auf das Vorhandensein bestimmter Analyten, etwa krankheitserregender Viren oder DNA-Stränge, dient. Die Bezeichnung Doppelmikroskop bezieht sich auf eine Ausgestaltung der Mikroskopanordnung mit zwei einander bezogen auf die Messprobe 12 gegenüberliegend angeordneten optischen Beobachtungsbaugruppen 14, 16, die von zwei verschiedenen Seiten her eine Beobachtung der Messprobe 12 erlauben. Die Beobachtungsbaugruppe 14 weist eine Objektivlinse 18, eine Lochblende 20 sowie ggf. weitere optische Elemente (Linsen, Filter, Blenden oder dergl.) auf, die in ihrer Gesamtheit dazu dienen, ein als Messvolumen bezeichnetes kleines Teilvolumen der Messprobe 12 auf einen Photodetektor 26 abzubilden. Im vorliegenden Beispielfall der Fig. 1 umfassen diese weiteren optischen Elemente eine Linse 22 und ein Filter 24. Der Abstand der Objektivlinse 18 von der Messprobe 12 kann weniger als 1 mm betragen; er kann aber auch größer als 1 mm sein. Eine diesbezügliche Abstandsbeschränkung besteht nicht. Die vorzugsweise baugleich ausgeführte Beobachtungsbaugruppe 16 weist in entsprechender Weise eine Objektivlinse 28, eine Lochblende 30 sowie ggf. weitere optische Elemente (hier eine Linse 32 sowie ein Filter 34) auf, die das Messvolumen auf einen Photodetektor 36 abbilden. Jede der Beobachtungsbaugruppen 14, 16 definiert einen vom Messvolumen zum jeweiligen Detektor 26 bzw. 36 verlaufenden Beobachtungsstrahlengang, der in Fig. 1 mit 38 bzw. 40 bezeichnet ist.

Das Doppelmikroskop 10 umfasst ferner eine Beleuchtungsbaugruppe 42, die dazu dient, einen auf das Messvolumen gerichteten Beleuchtungsstrahl bereitzustellen. Sie umfasst eine Laserquelle 44, einen in einem der Beobachtungsstrahlengänge 38, 40 (hier im Beobachtungsstrahlengang 38) angeordneten halbdurchlässigen (dichroitischen) Spiegel 46, mittels dessen der von der Laserquelle 44 ausgesandte Laserstrahl in Richtung auf das Messvolumen umgelenkt wird, und ggf. weitere optische Elemente zur Beeinflussung des Laserstrahls. Diese weiteren optischen Elemente umfassen im vorliegenden Beispielfall zumindest eine Linse 48, die der Vorfokussierung des Laserstrahls dient. Nach Ablenkung durch den Spiegel 46 trifft der Laserstrahl auf die Objektivlinse 18. Von dort wird er auf das Messvolumen der Messprobe 12 fokussiert. Die Beleuchtungsbaugruppe 42 definiert so - zusammen mit der Objektivlinse 18 - einen von der Laserquelle 44 zu dem Messvolumen führenden Beleuchtungsstrahlengang des Doppelmikroskops 10. Dieser Beleuchtungsstrahlengang ist in Fig. 1 mit 50 bezeichnet.

Der auf das Messvolumen treffende Laserstrahl regt darin befindliche (freie oder an die gesuchten Analyten gebundene) Fluorophore zu Fluoreszenz an. Dabei werden Lichtimpulse erzeugt, die von den Detektoren 26, 36 registriert werden. Die Detektoren 26, 36 können auf gleiche oder auf unterschiedliche Fluoreszenzwellenlängen ansprechen. Eine mit den Detektoren 26, 36 verbundene elektronische Auswerte- und Steuereinheit 52 wertet die von den Detektoren gelieferten Fluoreszenzdetektionssignale aus. Der Nachweis der gesuchten Analyten geschieht dabei bevorzugt über Auto-oder/und Kreuzkorrelationen der Fluoreszenzdetektionssignale.

Mikroskopanordnungen, bei denen das im Fokus eines Laserstrahls liegende Messvolumen zugleich exakt auf einen Detektor abgebildet wird, werden üblicherweise konfokal genannt. Konfokale Mikroskopanordnungen sind in der Fachwelt bekannt. Beispielhaft wird auf die EP 0 679 251 B1 verwiesen, der Konstruktionsdetails zu einem konfokalen Doppelmikroskop entnommen werden können.

Um bei dem Doppelmikroskop 10 der Fig. 1 exakte Konfokalität zu erzielen, muss der Beleuchtungsfokus, also der Fokus des Laserstrahls, exakt mit dem Beobachtungsfokus jedes der Beobachtungsstrahlengänge 38, 40 zusammenfallen. Zugleich sollen die Foki der beiden Beobachtungsstrahlengänge 38, 40 exakt deckungsgleich sein, damit nicht verschiedene Teilvolumina der Messprobe 12 von den beiden Detektoren 26, 36 beobachtet werden. Die Auswerte- und Steuereinheit 52 ist dazu ausgebildet, die Fokaleinstellung jedes Beobachtungs- und Beleuchtungsstrahlengangs automatisiert im Sinne vorstehender Kriterien vorzunehmen, und zwar in Abhängigkeit der von den Detektoren 26, 36 gelieferten Fluoreszenzdetektionssignale. Die Fokaleinstellung der Strahlengänge 38, 40, 50 erfolgt beispielsweise derart, dass zunächst der Beleuchtungsstrahlengang 50 und der Beobachtungsstrahlengang 38 fokal aufeinander abgestimmt werden und anschließend der Fokus des Beobachtungsstrahlengangs 40 deckungsgleich mit dem Fokus des Beobachtungsstrahlengangs 38 gemacht wird.

In jedem der Strahlengänge 38, 40, 50 ist zur Fokaleinstellung des betreffenden Strahlengangs mindestens eine optische Komponente mittels eines von der Auswerte- und Steuereinheit 52 gesteuerten Stellorgans 54 in mindestens einer Raumrichtung, gewünschtenfalls aber auch in zwei oder sogar drei zueinander orthogonalen Raumrichtungen verstellbar. Diese Komponente kann unabhängig von den anderen optischen Komponenten des betreffenden Strahlengangs verstellbar sein. Es ist aber auch denkbar, dass mindestens ein Teil der übrigen optischen Komponenten des betreffenden Strahlengangs mit der verstellbaren Komponente bewegungsgekoppelt ist, derart, dass bei einer Verstellung der einen Komponente auch dieser Teil der übrigen Komponenten eine Verstellung erfährt. Insbesondere können in einem .Strahlengang zwei oder mehr jeweils mittels eines Stellorgans 54 unabhängig voneinander verstellbare optische Komponenten angeordnet sein. In Fig. 1 können, was den Beobachtungsstrahlengang 38 anbelangt, beispielhaft die Objektivlinse 18 und die Lochblende 20 mittels je eines Stellorgans 54 unabhängig voneinander verstellbar sein. Es ist leicht nachvollziehbar, dass durch Verstellung jeder dieser beiden Komponenten die räumliche Lage des vom Detektor 26 aus gesehenen objektseitigen Fokus des Beobachtungsstrahlengangs 38 beeinflusst werden kann. Die Objektivlinse 18 liegt zudem im Beleuchtungsstrahlengang 50; eine Verstellung der Objektivlinse 18 würde daher neben dem Fokus des Beobachtungsstrahlengangs 38 gleichzeitig auch den Fokus des Beleuchtungsstrahlengangs 50 beeinflussen. Um den Fokus des Beleuchtungsstrahlengangs 50 unabhängig von dem Fokus des Beobachtungsstrahlengangs 38 einstellen zu können, ist ferner mindestens eine ausschließlich den Beleuchtungsstrahlengang 50 fokal beeinflussende optische Komponente mittels eines Stellorgangs 54 unabhängig von der Objektivlinse 1 8 verstellbar. Im Fall der Fig. 1 ist dies die Vorfokussierungslinse 48. Diese ist vorzugsweise längs des Beleuchtungsstrahlengangs 50 und auch quer zu diesem (also in Fig. 1 nach oben und unten) justierbar.

Es ist zu beachten, dass Fig. 1 lediglich Beispiele für verstellbare Komponenten zeigt. Grundsätzlich können zur Fokaleinstellung beliebige optische Komponenten eines Strahlengangs unabhängig oder in Abhängigkeit von anderen Komponenten verstellbar sein. Insbesondere ist es vorstellbar, dass die Detektoren 26, 36 oder/und die Laserquelle 44 verstellbar sind. Daneben können selbstverständlich auch die Linsen 22, 32 oder/und der Spiegel 46 verstellbar sein.

Die Auswerte- und Steuereinheit 52 zählt anhand der von den Detektoren gelieferten Signale vorzugsweise die pro Molekül detektierten Ereignisse und steuert im Rahmen der Fokaleinstellung der Strahlengänge 38, 40, 50 die Stellorgane 54 in Abhängigkeit von Korrelationssignalen, welche sie aus den Detektorsignalen ermittelt. Zur fokalen Indeckungbringung des Beleuchtungsstrahlengangs 50 und des Beobachtungsstrahlengangs 38 ermittelt sie aus dem vom Detektor 26 gelieferten Fluoreszenzdetektionssignal insbesondere ein Autokorrelationssignal erster oder/und höherer Ordnung. Abhängig von dem Autokorrelationssignal bewirkt die Auswerte- und Steuereinheit 52 dann durch geeignete Ansteuerung der Stellorgane 54 eine Verstellung wenigstens eines Teils der verstellbaren optischen Komponenten des Beobachtungsstrahlengangs 38 oder/und des Beleuchtungsstrahlengangs 50. Dies geschieht vorzugsweise in Abhängigkeit von der Amplitude und der Halbwertszeit der Korrelation. Wenn das Autokorrelationssignal einen von null verschiedenen Wert annimmt, insbesondere eine signifikante Spitze aufweist, ist erreicht, dass die Foki des Beobachtungsstrahlengangs 38 und des Beleuchtungsstrahlengangs 50 zusammenfallen.

Um sodann den Fokus des anderen Beobachtungsstrahlengangs 40 in Deckung mit dem Fokus des Beobachtungsstrahlengangs 38 zu bringen, ermittelt die Auswerte- und Steuereinheit 52 aus den Fluoreszenzdetektionssignalen der beiden Detektoren 26, 36 ein Kreuzkorrelationssignal erster oder/und höherer Ordnung. In Abhängigkeit von diesem Kreuzkorrelationssignal, insbesondere wiederum abhängig von Amplitude und Halbwertszeit der Kreuzkorrelation, bewirkt sie dann eine Verstellung wenigstens eines Teils der verstellbaren optischen Komponenten des Beobachtungsstrahlengangs 40, bis das Kreuzkorrelationssignal einen von null verschiedenen Wert annimmt, insbesondere eine signifikante Spitze aufweist. Sobald das Kreuzkorrelationssignal ein solches Verhalten zeigt, ist erreicht, dass die Foki der Beobachtungsstrahlengänge 38, 40 zusammenfallen.

In einer bevorzugten praktischen Ausführungsform des Doppelmikroskops der Fig. 1 sind die Objektlinsen 18, 28 und die Lochblenden 20, 30 fest. Dagegen sind die Linsen 22, 32 justierbar. Im Beleuchtungsstrahlengang 50 ist des Weiteren die Linse 48 justierbar.

Korrelationsfunktionen höherer Ordnung können zur weiteren Optimierung des auf Rückkopplung basierenden Justieralgorithmus verwendet werden. Beispielhaft stelle man sich vor, dass die zur Markierung der Analyten verwendeten fluoreszierenden Moleküle Lichtimpulse verschiedener (mehr als zwei) Emissionswellenlängen aussenden. Wenn die beiden Detektoren 26, 36 auf voneinander unterschiedliche Wellenlängen ansprechen, kann die Koinzidenz zwischen den Foki der beiden Beobachtungsstrahlengänge 38, 40 über eine Mehrfarben-Korrelationsfunktion höherer Ordnung erfasst werden.

Die Stellorgane 54 können beliebiger Ausgestaltung sein. Beispielsweise kann es sich bei ihnen um piezoelektrische Stellorgane oder um mechanische Mikro-Schraubtriebe handeln.

In den weiteren Figuren sind gleiche oder gleich wirkende Bestandteile mit gleichen Bezugszeichen wie in Fig. 1 versehen, jedoch ergänzt um einen Kleinbuchstaben, Um Wiederholungen zu vermeiden, wird zur Erläuterung dieser Bestandteile auf die vorangehenden Ausführungen zu Fig. 1 verwiesen. Nachfolgend soll lediglich auf Unterschiede zur Ausführungsform der Fig. 1 eingegangen werden.

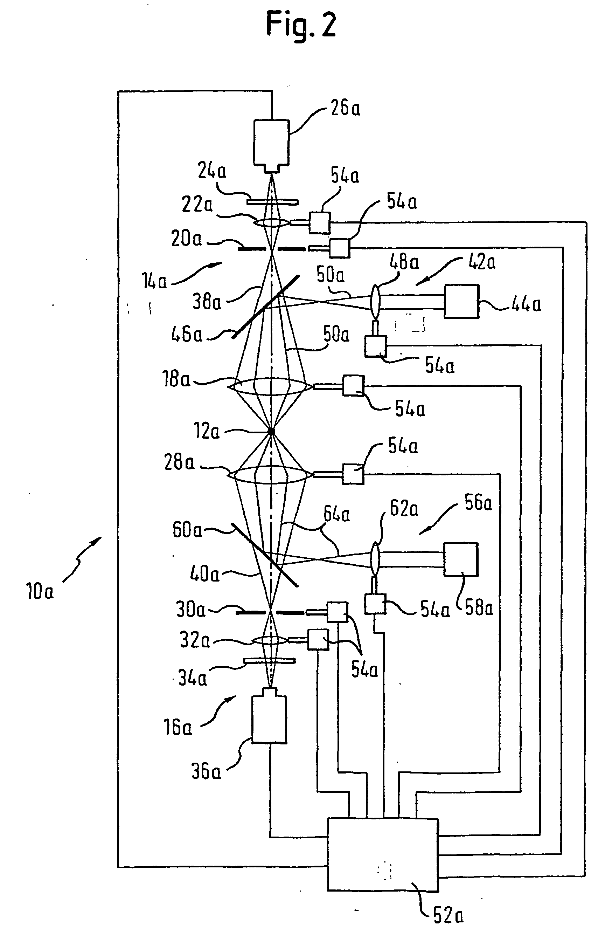

Bei dem Ausführungsbeispiel der Fig. 1 wurde die Messprobe lediglich von einer Seite mit Licht bestrahlt. Fig. 2 zeigt ein Ausführungsbeispiel, bei dem die Messprobe 12a von zwei gegenüberliegenden Seiten her mit Licht bestrahlt wird. Hierzu ist eine weitere Beleuchtungsbaugruppe 56a vorgesehen, welche eine Laserquelle 58a, einen in dem Beobachtungsstrahlengang 40a angeordneten dichroitischen Spiegel 60a und ggf. weitere optische Elemente zur Beeinflussung des Laserstrahls der Laserquelle 58a aufweist. Diese weiteren optischen Elemente umfassen im vorliegenden Beispielfall zumindest eine Vorfokussierungslinse 62a. Nach Ablenkung durch den Spiegel 60a trifft der Laserstrahl der Laserquelle 58a auf die Objektivlinse 28a. Von dort wird er auf das Messvolumen der Messprobe 12a fokussiert. Die Beleuchtungsbaugruppe 56a definiert zusammen mit der Objektivlinse 28a einen weiteren Beleuchtungsstrahlengang des Doppelmikroskops 10a, der von der Laserquelle 58a zu dem Messvolumen führt und in Fig. 2 mit 64a bezeichnet ist.

Der Fokus dieses Beleuchtungsstrahlengangs 64a soll optimalerweise so eingestellt werden, dass er exakt mit den Foki des Beleuchtungsstrahlengangs 50a und der Beobachtungsstrahlengänge 38a, 40a zusammenfällt. Hierzu ist wenigstens eine ausschließlich den Beleuchtungsstrahlengang 64a fokal beeinflussende optische Komponente des Doppelmikroskops 10a mittels eines Stellorgangs 54a verstellbar. In Fig. 2 ist dies die Vorfokussierungslinse 62a. Es versteht sich, dass alternativ oder zusätzlich auch die Laserquelle 58a oder/und der Spiegel 60a mittels eines solchen Stellorgans 54a verstellbar sein können.

Die Reihenfolge, in der die einzelnen Strahlengänge 38a, 40a, 50a, 64a des Doppelmikroskops 10a fokal eingestellt werden, kann beispielsweise derart sein, dass zunächst - wie bei dem Ausführungsbeispiel der Fig. 1 - die Strahlengänge 38a, 40a und 50a relativ zueinander justiert werden und sodann der Fokus des Beleuchtungsstrahlengangs 64a deckungsgleich mit dem Fokus des Beobachtungsstrahlengangs 40a gemacht wird, dies wiederum unter Heranziehung der Autokorrelation erster oder/und höherer Ordnung des Fluoreszenzdetektionssignals des Detektors 36a.

Die beiden Laserquellen 44a, 58a können Laserlicht unterschiedlicher Wellenlängen ausstrahlen. Es ist freilich nicht ausgeschlossen, dass die Laserquellen 44a, 58a Licht gleicher Wellenlänge ausstrahlen. Eine Abwandlung der Fig. 2 kann darin bestehen, eine der Laserquellen 44a, 58a wegzulassen und das Licht der verbleibenden Laserquelle aufzuteilen. Jeder Teil des von dieser einzigen Laserquelle ausgesandten Laserstrahls wird dann in einen der Beleuchtungsstrahlengänge 50a, 64a eingespeist.

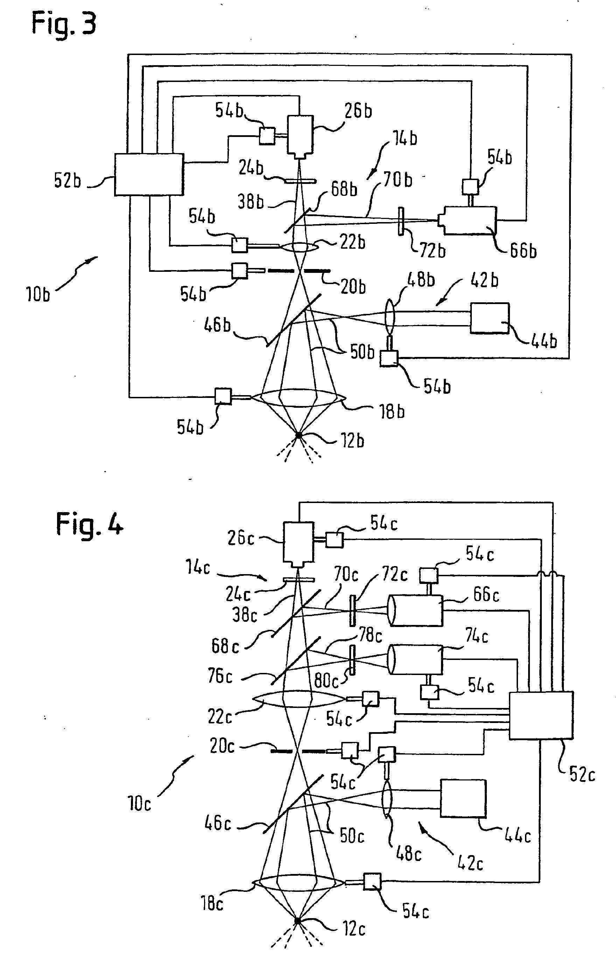

Bei dem Ausführungsbeispiel der Fig. 3 umfasst die Beobachtungsbaugruppe 14b nicht nur den Detektor 26b, sondern ferner einen zweiten Detektor 66b, wobei das von den fluoreszierenden Molekülen der Messprobe 12b ausgesandte Licht mittels eines in dem Beobachtungsstrahlengang 38b nach der Lochblende 20b und nach der Linse 22b angeordneten dichroitischen Spiegels 68b teilweise zu dem Detektor 66b umgelenkt wird. Es wird so ein weiterer Beobachtungsstrahlengang definiert, der in Fig. 3 mit 70b bezeichnet ist und von der Messprobe 12b bis zu dem Spiegel 68b und von dort zum Detektor 66b verläuft. In dem Teil des Beobachtungsstrahlengangs 70b, der getrennt von dem Beobachtungsstrahlengang 38b verläuft, können weitere optische Elemente angeordnet sein, so z.B. ein Filter 72b. Vorzugsweise detektieren die Detektoren 26b, 66b Licht unterschiedlicher Wellenlängen.

Zur fokalen Justierung des Mikroskops 10b können beispielsweise zunächst - wie bei dem Ausführungsbeispiel der Fig. 1 - einer der Beobachtungsstrahlengänge 38b, 70b und der Beleuchtungsstrahlengang 50b aufeinander abgestimmt werden. Sodann kann der andere Beobachtungsstrahlengang mittels Autokorrelation fokal auf den Beleuchtungsstrahlengang 50b oder/und mittels Kreuzkorrelation fokal auf den einen Beobachtungsstrahlengang abgestimmt werden. Zur voneinander unabhängigen Fokaleinstellung der beiden Beobachtungsstrahlengänge 38b, 70b können in Fig. 3 die beiden Detektoren 26b, 66b jeweils mittels eines Stellorgans 54b verstellbar sein. Es kann in einer bevorzugten Ausführungsform auch nur einer der beiden Detektoren 26b, 66b verstellbar sein, während der andere fest ist. Von den Komponenten 18b, 20b, 22b ist - wenngleich in Fig. 3 ein Stellorgan 54b zu jeder dieser Komponenten eingezeichnet ist - vorzugsweise nur die Linse 22b verstellbar, während die Objektivlinse 18b und die Lochblende 20b vorzugsweise fest sind.

Bei dem Ausführungsbeispiel der Fig. 4 umfasst die Beobachtungsbaugruppe 14c sogar drei vorzugsweise auf unterschiedliche Wellenlängen ansprechende Detektoren, nämlich neben den Detektoren 26c, 66c noch einen dritten Detektor 74c. Dieser detektiert Licht, das mittels eines weiteren, in dem Beobachtungsstrahlengang 38c angeordneten dichroitischen Spiegels 76c aus dem von der Messprobe 12c emittierten Licht herausgeteilt wird. Es wird so ein Beobachtungsstrahlengang 78c definiert, der von der Messprobe 12b bis zu dem Spiegel 76c und von dort zum Detektor 74c verläuft. In dem Teil des Beobachtungsstrahlengangs 78c, der getrennt von den Beobachtungsstrahlengängen 38c, 70c verläuft, können wiederum weitere optische Elemente angeordnet sein, so z.B. ein Filter 80c.

Ähnlich wie bei dem Ausführungsbeispiel der Fig. 3, können zur fokalen Justierung des Mikroskops 10c der Fig. 4 beispielsweise zunächst die Foki eines der Beobachtungsstrahlengänge 38c, 70c, 78c und des Beleuchtungsstrahlengangs 50c in Deckung gebracht werden. Sodann können die beiden anderen Beobachtungsstrahlengänge jeweils mittels Autokorrelation fokal auf den Beleuchtungsstrahlengang 50c oder/und mittels Kreuzkorrelation fokal auf den einen Beobachtungsstrahlengang abgestimmt werden. Zur voneinander unabhängigen Fokaleinstellung der drei Beobachtungsstrahlengänge 38c, 70c, 78c ist in Fig. 4 allen Detektoren 26c, 66c, 74c jeweils ein Stellorgan 54b zugeordnet. Vorzugsweise sind jedoch nur zwei der Detektoren und die Linse 22c verstellbar.

Wenngleich die Mikroskopanordnungen der Fig. 3 und 4 jeweils nur als Einfachmikroskop dargestellt sind, bei dem die Messprobe nur von einer Seite beobachtet wird, können sie selbstverständlich auch als Doppelmikroskop ausgebildet sein, bei dem - wie in den Fig. 1 und 2 - auch auf der gegenüberliegenden Seite der Messprobe Beobachtungs- und gewünschtenfalls auch Beleuchtungsmittel vorgesehen sind. Dies ist in den Fig. 3 und 4 jeweils gestrichelt unterhalb der Messprobe angedeutet. Insbesondere kann dabei eine spiegelbildliche Ausgestaltung des Mikroskops gewählt werden. Des Weiteren versteht es sich, dass im Rahmen der Erfindung grundsätzlich auch Mehrfach-Mikroskopanordnungen denkbar sind, bei denen von mehr als zwei Seiten eine Beobachtung der Messprobe stattfindet.

## Patentansprüche

1. Mikroskopanordnung zur Fluoreszenzspektroskopie, insbesondere Fluoreszenzkorrelationsspektroskopie, mit mindestens zwei Strahlengängen (38, 40, 50), welche jeweils auf ein in einem gemeinsamen Messbereich der Mikroskopanordnung liegendes Messvolumen einer zu untersuchenden Messprobe (12) fokussierbar sind, wobei mindestens einer (50) der Strahlengänge (38, 40, 50) ein Beleuchtungsstrahlengang zur Anregung der im Messvolumen befindlichen Fluorophore zu Fluoreszenz ist, welcher von einer Lichtquelle (44) zu dem Messbereich führt, wobei mindestens ein weiterer (38, 40) der Strahlengänge (38, 40, 50) ein Beobachtungsstrahlengang ist, welcher von dem Messbereich zu einem ein Fluoreszenzdetektionssignal bereitstellenden Photodetektor (26, 36) führt, und wobei die Mikroskopanordnung mindestens ein in einem der Strahlengänge (38, 40, 50) angeordnetes optisches Element (18, 20, 22, 28, 30, 48) aufweist, welches zur Fokaleinstellung dieses Strahlengangs (38, 40, 50) verstellbar ist, wobei eine auf das Fluoreszenzdetektionssignal ansprechende und mit dem optischen Element (18, 20, 22, 28, 30, 48) in Stellverbindung stehende elektronische Stell-Steuereinrichtung (52) vorhanden und dazu ausgebildet ist, zur Fokaleinstellung des betreffenden Strahlengangs (38, 40, 50) eine von dem Fluoreszenzdetektionssignal abhängige Verstellung des optischen Elements (18, 20, 22, 28, 30, 48) zu bewirken, **dadurch gekennzeichnet, dass** die Stell-Steuereinrichtung (52) dazu ausgebildet ist, zur fokalen Indeckungbringung des Beleuchtungsstrahlengangs (50) und des Beobachtungsstrahlengangs (38) eine Verstellung des optischen Elements (18, 20, 22, 28, 30, 48) in Abhängigkeit eines von dem Fluoreszenzdetektionssignal abgeleiteten Autokorrelationssignals zu bewirken.

2. Mikroskopanordnung nach Anspruch 1,
**dadurch gekennzeichnet, dass** zur Fokaleinstellung eines Beleuchtungsstrahlengangs (50) und eines Beobachtungsstrahlengangs (38) relativ zueinander die Stell-Steuereinrichtung (52) dazu ausgebildet ist, eine Verstellung mindestens eines ausschließlich in dem Beleuchtungsstrahlengang (50) angeordneten optischen Elements (48) oder/und eine Verstellung mindestens eines ausschließlich in dem Beobachtungsstrahlengang (38) angeordneten optischen Elements (20, 22) in Abhängigkeit eines Autokorrelationssignals zu bewirken.

3. Mikroskopanordnung nach Anspruch 1 oder 2,
**dadurch gekennzeichnet, dass** zur Idealen Indeckungbringung eines ersten und eines zweiten Beobachtungsstrahlengangs (38, 40) relativ zueinander die Stell-Steuereinrichtung (52) dazu ausgebildet ist, eine Verstellung mindestens eines ausschließlich in dem ersten Beobachtungsstrahlengang (38) angeordneten optischen Elements (18, 20, 22) oder/und eine Verstellung mindestens eines ausschließlich in dem zweiten Beobachtungsstrahlengang (40) angeordneten optischen Elements (28, 30, 32) in Abhängigkeit eines Kreuzkorrelationssignals zu bewirken, welches durch Kreuzkorrelation der Fluoreszenzdetektionssignale der in den beiden Beobachtungsstrahlengängen (38, 40) angeordneten Photodetektoren (26, 36) hergeleitet ist.

## Claims

1. Microscope array for fluorescence spectroscopy, especially fluorescence correlation spectroscopy, having at least two beam paths (38, 40, 50) that can be focused onto a measuring volume, situated in a common measuring area of the microscope array, of a sample (12) to be investigated, at least one (50) of the beam paths (38, 40, 50) being an illuminating beam path for exciting the fluorophores located in the measuring volume to fluorescence that leads from a light source (44) to the measuring area, at least one further (38, 40) of the beam paths (38, 40, 50) being an observing beam path that leads from the measuring area to a photodetector (26, 36) providing a fluorescence detection signal, and the microscope array having at least one optical element (18, 20, 22, 28, 30, 48) that is arranged in one of the beam paths (38, 40, 50) and can be adjusted for the purpose of setting the focus of this beam path (38, 40, 50), wherein an electronic actuating and control device (52) that responds to the fluorescence detection signal and is connected in an actuating fashion to the optical element (18, 20, 22, 28, 30, 48) is present and is designed to adjust the optical element (18, 20, 22, 28, 30, 48) as a function of the fluorescence detection signal in order to set the focus of the relevant beam path (38, 40, 50), **characterized in that** the actuating and control device (52) is designed to adjust the optical element (18, 20, 22, 28, 30, 48) as a function of an autocorrelation signal derived from the fluorescence detection signal in order to bring the illuminating beam path (50) and the observing beam path (38) into focal coincidence.

2. Microscope array according to Claim 1, **characterized in that**, in order to set the focus of an illuminating beam path (50) and an observing beam path (38) relative to one another, the actuating and control device (52) is designed to adjust at least one optical element (48), arranged exclusively in the illuminating beam path (50), or/and to adjust at least one optical element (20, 22), arranged exclusively in the observing beam path (38), doing so as a function of an autocorrelation signal.

3. Microscope array according to Claim 1 or 2, **characterized in that**, for the focal convergence of a first and a second observing beam path (38, 40) relative to one another, the actuating and control device (52) is designed to adjust at least one optical element (18, 20, 22), arranged exclusively in the first observing beam path (38), or/and to adjust at least one optical element (28, 30, 32), arranged exclusively in the second observing beam path (40), doing so as a function of a cross-correlation signal that is derived by cross-correlation of the fluorescence detection signals of the photodetectors (26, 36) arranged in the two observing beam paths (38, 40).

## Revendications

1. Ensemble microscope pour la spectroscopie à corrélation de fluorescence, avec au moins deux rayons (38, 40, 50) qui peuvent être focalisés chacun sur un volume de mesure d'un échantillon (12) à étudier situé dans une zone de mesure commune de l'ensemble microscope, au moins l'un (50) des rayons (38, 40. 50) étant un rayon d'éclairage afin d'exciter les fluorophores présents dans le volume de mesure en vue d'une fluorescence, rayon qui va d'une source lumineuse (44) à la zone de mesure, au moins un autre (38, 40) des rayons (38, 40, 50) étant un rayon d'observation qui conduit de la zone de mesure à un photodétecteur (26, 36) fournissant un signal de détection de fluorescence, et l'ensemble microscope présentant au moins un élément optique (18, 20, 22, 28, 30, 48) placé sur l'un des rayons (38, 40, 50), élément qui est mobile pour le réglage focal de ce rayon (38, 40, 50), un dispositif de commande de déplacement (52) électronique réagissant au signal de détection de fluorescence et en liaison de réglage avec l'élément optique (18, 20, 22, 28, 30, 48) étant présent et conformé pour provoquer un déplacement de l'élément optique (18, 20, 22, 28, 30, 48) dépendant du signal de fluorescence pour le réglage focal du rayon (38, 40, 50) concerné, **caractérisé en ce que** le dispositif de commande de déplacement (52) est conformé pour provoquer un déplacement de l'élément optique (18, 20, 22, 28, 30, 48) en fonction d'un signal d'autocorrélation déduit du signal de fluorescence pour la mise en coïncidence focale du rayon d'éclairage (50) et du rayon d'observation (38).

2. Ensemble microscope selon la revendication 1, **caractérisé en ce que**, pour le réglage focal d'un rayon d'éclairage (50) et d'un rayon d'observation (38) l'un par rapport à l'autre, le dispositif de commande de déplacement (52) est conformé pour provoquer un déplacement d'au moins un élément optique (48) placé exclusivement sur le rayon d'éclairage (50) et/ou un déplacement d'au moins un élément optique (20, 22) placé exclusivement sur le rayon d'observation (38) en fonction d'un signa d'autocorrélation.

3. Ensemble microscope selon la revendication 1 ou 2 **caractérisé en ce que**, pour la mise en coïncidence focale d'un premier et d'un deuxième rayon d'observation (38, 40) l'un par rapport à l'autre, le dispositif de commande de déplacement (52) est conformé pour provoque un déplacement d'au moins un élément optique (18, 20, 22) placé exclusivement sur le premier rayon d'observation (40) et/ou un déplacement d'au moins un élément optique (28, 30, 32) placé exclusivement sur le deuxième rayon d'observation (38) en fonction d'un signal de corrélation croisée, qui est obtenu par corrélation croisée des signaux de détection de fluorescence des photodétecteurs (26, 36) placés sur les deux rayons (38, 40).
